(19) Europäisches Patentamt

European Patent Office

Office européen des brevets

(11) Publication number: **0 311 566 B1**

# EUROPEAN PATENT SPECIFICATION

(12)

(45) Date of publication of patent specification: **24.03.93**

(51) Int. Cl.⁵: **C08F 220/18**, C08F 220/54, C09K 9/02, //(C08F220/18, 220:54),(C08F220/54,220:18)

(21) Application number: **88810667.1**

(22) Date of filing: **28.09.88**

(54) Thermotropic biphilic hydrogels and hydroplastics.

(30) Priority: **05.10.87 US 105070**
**31.05.88 US 200212**

(43) Date of publication of application:
**12.04.89 Bulletin 89/15**

(45) Publication of the grant of the patent:
**24.03.93 Bulletin 93/12**

(84) Designated Contracting States:
**CH DE FR GB IT LI NL**

(56) References cited:
**US-A- 4 067 839**
**US-A- 4 625 009**

(73) Proprietor: **CIBA-GEIGY AG**
**Klybeckstrasse 141**
**CH-4002 Basel(CH)**

(72) Inventor: **Müller, Karl F.**
**119 West 77th Street**
**New York New York 10024(US)**

Rank Xerox (UK) Business Services
(3.10/3.5x/3.0.1)

## Description

Many polymer solutions exhibit a cloud point phenomenon, which occurs at the cloud point temperature, above or below which the polymer is soluble and the solution is clear, but below or above it becomes insoluble and precipitates and solutions become opaque. In most polymer-solvent systems solubility decreases with falling temperature, but in some cases involving polar polymers, the opposite occurs and the polymer suddenly precipitates at a specific, higher temperature, the cloud-point temperature, or lower critical solution temperature (LCST). If such clear to opaque transitions due to deswelling occur at a low enough temperature and are reversible, such polymer solutions or gels are useful in a variety of applications such as self-activating sunscreens or temperature dependent drug release systems. Polymer solutions exhibiting such reversible phase transitions occurring at low temperatures have been described in Japanese patent Nos. 85 190444; 85 208336; and 86 66707; they consist of aqueous solutions or gels of poly-isopropylacrylamide and of isopropyl acrylamide/N-methylolacrylamide copolymers and of pyrrolidyl or piperidyl/acrylamide copolymers. Besides these acrylamides, N-iso-, N-n-, N-cyclopropylacrylamide and the corresponding methacrylamides are described in these patents, as well as N,N-diethylacrylamide as the only disubstituted acrylamide. Only these acrylamides or methacrylamides have a sufficiently hydrophobic component as part of their structure to form homopolymers, which can change from a hydrophilic water binding to a hydrophobic water excluding structure at relatively low temperatures.

US Patent 4,067,839 describes a hydrophilic crosslinked copolymer that is made by copolymerization of an acrylamide and $C_1$-$C_4$-alkyl acrylates or methacrylates in the presence of a crosslinking agent. The copolymers are useful as hydrogels having an optical clarity sufficient for the use in contact lenses for instance.

US Patent 4,625,009 relates to high-hydration contact lens material that is obtained by the copolymerization of NN-dimethyl acrylamide, a hydrophobic monomer and an unsaturated carboxylic acid having one ethylenically unsaturated bond in the presence of a crosslinking agent.

It has now unexpectedly been discovered that copolymers of N,N-dimethylacrylamide (DMA), which is very hydrophilic, but whose homopolymer by itself does not form a thermo-reversible aqueous solution, and hydrophobic $C_1$-$C_{18}$ alkyl acrylates can be used to make copolymers which as aqueous solutions or gels exhibit temperature dependent reversible cloud points and swelling changes at low temperatures.

This was especially unexpected, since crosslinked hydrogels formed by copolymerization of dimethylacrylamide, 20-80 % by weight, with $C_1$-$C_4$-alkylacrylates or methacrylates, 80-20 % by weight and a small amount of crosslinking agent are described in U.S. 4,067,839 as colorless clear gels and even especially claimed as contact lenses; indeed, it was very surprisingly found, that if within the range of the above specification only alkyl acrylates are used, and only those with an average chain length greater than 1.2 C atoms in the alkyl group, the obtained hydrogels exhibit thermotropic, reversible cloud points between 0 to 37°C, making them very unsuitable as contact lenses, but useful as heat activated sunscreens for example.

### Detailed Description

The polymers of this invention are preferably random copolymers which comprise the copolymerization product of

(a) 10 to 85 % by weight of N,N-dimethylacrylamide;

(b) 90 to 15 % by weight of an aliphatic, cycloaliphatic, aromatic or araliphatic hydrocarbyl acrylate or mixture thereof which contains an average of 1.2 to 18 carbon atoms in the hydrocarbyl moiety;

(c) 0 to 5 % by weight of a polyolefinic crosslinking monomer,

with the proviso,

a) that if the average chain-lenght of the hydrocarbyl moiety is less than 5 carbon atoms, the polymer is uncrosslinked (c is zero) and

b) that in the copolymerization step the reaction mixture is essentially free of unsaturated carboxylic acids having one ethylenically unsaturated bond.

Preferred copolymers of the instant invention are the copolymers which comprise the copolymerization product of

(a) 20 to 75 % by weight of N,N-dimethylacrylamide,

(b) 80 to 25 % by weight of an alkyl or cycloalkyl acrylate or mixture thereof which contains an average of 1.25 to 12 carbon atoms in said alkyl or cycloalkyl moiety, and

(c) 0 to 1 % by weight of a polyolefinic crosslinking monomer, with the proviso, that if the average chain-length of the hydrocarbyl moiety is less than 5 carbon atoms, the polymer is uncrosslinked (c is zero).

Still more preferred copolymers are those which are the copolymerization product of

(a) 25 to 65 % by weight of N,N-dimethacrylamide,

(b) 75 to 35 % by weight of an alkyl or cycloalkyl acrylate or mixture thereof which contains an average of 6 to 10 carbon atoms in said alkyl or cycloalkyl moiety, and

(c) 0 to 0.5 % by weight of a polyolefinic crosslinking monomer.

In a preferred embodiment, component (c) in the above preferred compositions is particularly zero.

Other preferred copolymers of this invention are those where the hydrocarbyl moiety of the acrylate component (b) is a cycloaliphatic moiety containing 6 to 12 carbons.

Other preferred copolymers of this invention are those where the hydrocarbyl moiety of the acrylate component (b) contains an average of 1.25-5 carbon atoms and component (c) is zero.

Other preferred copolymers of this invention are those prepared in the presence of 1 to 10 mol %, based on the total olefinic monomers polymerized, of a chain transfer agent.

Still other preferred copolymers of this instant invention are those wherein both, component (c) is 0 % by weight.

Useful hydrocarbyl acrylates (b) are: aliphatic $C_1$-$C_{18}$-n-alkyl acrylates, including methyl-, ethyl-, propyl-, butyl-, hexyl-, octyl-, nonyl-, decyl-, dodecyl-, tridecyl-acrylates; branched chain alkyl acrylates with 5-14 C-atoms, including 2-ethylhexyl acrylate; cycloaliphatic acrylates such as cyclohexyl-, trimethylcyclohexyl-, cyclopentadienyl-, bornyl-, isobornyl acrylate; aromatic or araliphatic acrylates like phenyl acrylate and benzyl acrylate. Combinations of these acrylates with methyl acrylate are also useful, as long as the average chain length of the hydrocarbyl group of the comonomer is at least 1.20 C atoms. Preferred are those hydrocarbyl acrylates containing an average of 1.25 to 12 carbon atoms in the hydrocarbyl group thereof. Most preferred are those having 1.25 to 10 carbon atoms in the hydrocarbyl group.

These monomers can be used alone or in combination with each other and may contain minor amounts (e.g. up to 30 weight percent) of other comonomers such as acrylates, methacrylates, vinyl esters, vinyl ethers, as well as the fumarates and maleates with alkyl groups with 1-18 C-atoms; styrene; $\alpha$-methyl-styrene; silicone containing (meth-)acrylates, like tris(-trimethylsiloxanyl-)silyl-propyl methacrylate; fluorine containing (meth-)acrylates, like hexafluorisopropyl methacrylate or 1,1,1,1-tetrahydroheptadecylfluoro decyl (meth-)acrylate; maleic anhydride; also useful are water soluble comonomers like hydroxyethyl- and hydroxypropyl acrylate and methacrylate; poly-ethoxyethyl methacrylate; N-vinylpyrrolidone; acrylamide and N-isopropyl-, N-n-propyl-, N,N-diethyl-, N-2 and 3-hydroxy-propyl- and N-2-hydroxy-ethyl acrylamide-, N-cyclohexyl-, N-methyl-N-ethylacrylamide and methacrylamide; vinyl acetamide; dimethylaminoethyl methacrylate and -methacrylamide; styrenesulfonic acid; vinylsulfonic acid; 2-methl-2-methacrylamidopropanesulfonic acid (AMPS); 2-isocyanatoethyl methacrylate or m-isopropenyl-$\alpha,\alpha$-dimethylbenzyl isocyanate can also be incorporated to introduce reactive sites fo subsequent crosslinking reactions.

Where such other copolymerizable monomers are present, there may be present, for example, in amounts varying from preferably 0.005 to 30 %, especially up to 10 % by weight.

If crosslinked polymers are desired, commonly used crosslinking polyolefinic monomers are added in amounts varying from about 0.005 to about 1 % by weight. Typical examples of polyolefinic monomers are: Allyl acrylate and methacrylate, ethylene glycol-, diethylene glycol-, triethylene glycol-, tetraethylene glycol-, and generally polyethylene oxide glycol diacrylates and dimethacrylates; 1,4-butane diol and poly-n-butylene oxide glycol diacrylates and dimethacrylates; propylene glycol and polypropylene oxide glycol diacrylates and dimethacrylates; thiodiethylene glycol diacrylate and dimethacrylate; neopentylene glycol diacrylate and dimethacrylate; trimethylolpropane tri- and tetraacrylate; pentaerythritol tri- and tetraacrylate; divinylbenzene; divinyl ether; divinyl sulfone; disiloxanyl-bis-3-hydroxybutyl diacrylate or methacrylate and related compounds; Bisphenol A diacrylate or dimethacrylate, ethoxylated bisphenol A diacrylate or dimethacrylate; methylene bisacrylamide or methacrylamide, dimethylene bisacrylamide or methacrylamide; allyl and diallyl maleate, triallyl melamine, diallyl itaconate, diallyl phthalate, triallyl phosphite, polyallyl sucrose, sucrose diacrylate, glucose dimethacrylate; also unsaturated polyesters, such as poly-(alkylene glycol maleates) and poly(alkylene-glycol fumarates), like poly(propylene glycol maleate) and poly-(polyalkyleneoxide glycol maleate).

Macromeric divinyl urethane compounds can also be used for copolymerization like poly(ethylene oxide) dimethacrylate, polytetramethylene oxide dimethacrylate (U.S. 4,192,827) or polysiloxane-dialkylene-dimethacrylates (U.S. 4,605,712) or perfluoroether dimethacrylates (U.S. 4,440 918).

When the polymer of this invention contains in major amounts (by weight) components other than N,N-dimethyl-acrylamide and said hydrocarbyl acrylates (b), the cloud point effect may be weakened.

A further object of this invention is a composition exhibiting a reversible temperature dependent clear to opaque transition between 0°C and 50°C, which comprises

(a) 10 to 98 % by weight of water, and

(b) 90 to 2 % by weight of a crosslinked or linear water-swellable copolymer according to the invention.

A preferred embodiment is a composition exhibiting a reversible temperature dependent clear to opaque transition between 0°C and 50°C, which comprises

(a) 10 to 99.5 % by weight of water, and

(b) 90 to 0.5 % by weight of a substantially uncrosslinked polymer which polymer is soluble in water below the cloud point and which comprises the copolymerization product of

(a) 25-65 % by weight of N,N-dimethyl acrylamide, and

(b) 75-35 % by weight of an alkyl acrylate or mixture thereof which contains an average of 1.25-5 carbon atoms in said alkyl moiety, and wherein component (c) is zero.

Where the polymer according to the present invention is substantially uncrosslinked and soluble in water below the cloud point, solutions containing such polymer exhibit the reversible clear to opaque transition and reversible precipitation. Preferably such solutions contain between about 90 % to as little as about 1 % by weight polymer. The preferred uncrosslinked polymers of this embodiment are those employing ethyl acrylate and acrylate mixtures containing methyl acrylate, with an average of at least 1.2 C-atoms in the alkyl group, and those copolymers made from $C_3$-$C_{10}$ aliphatic and cycloaliphatic hydrocarbyl acrylates in the presence of 0.1-2.0 mol % of a chain-transfer agent.

The weight average molecular weight of the copolymers can vary widely without substantially affecting the basic reversible properties of the polymer. Thus, the polymer can vary depending upon the desired physical characteristics desired, e.g. from oligomers to crosslinked polymer materials.

Where the polymer according to the present invention is not soluble in aqueous media, be it as crosslinked polymers (hydrogels) or as linear non-soluble, but swellable polymers(hydroplastics), the hydrated polymer compositon preferably can contain between 10 % to 98 % water, more preferably between 10 % to 80 % by weight water.

The hydrated polymers exhibit a reversible clear to opaque cloud point transition at a temperature between 0°C up to 50°C, depending upon the polymer chosen. The polymers exhibit clarity at temperatures below the transition point.

Accordingly, the hydrated copolymers are useful as qualitative thermometers, thermosensors, self-activated sunscreens and the like. For example, the copolymer in its hydrated state, either as an aqueous gel or solution, can be placed between transparent plates, such as glass or plastic to form a self-activating sunscreen or thermoregulator. This sandwich structure has to be sealed to prevent loss of water from the hydrated polymer contained within the transparent plates. As the plate temperature rises to exceed the transition temperature, the hydrated polymer opacifies, thereby blocking a portion of sunlight normally passing through the plates. As a result, such sandwich plates can be used in greenhouses to modulate the amount of sunlight and sunlight generated heat within a greenhouse, or to moderate the amount of sunlight generated heat within a structure, such as a house or office, containing the aforementioned sandwich plates, for example as windows, skylights and the like. Depending upon the environment, the thickness of the gel or solution within such plates can vary widely, but is preferably between about 0.01 and 50 mm.

At their cloud point the polymers become insoluble in water or, if in a crosslinked state, shrink from a high to a low water content gel. This shrinkage is specially pronounced when the crosslinked polymers are synthesized as 10-50 % solutions in good solvents. Such heat sensitive reversibly swelling gels and or reversibly precipitating and dissolving polymers are useful as active-ingredients absorbing and releasing gels, as extracting polymers and as heat activated membranes, changing from a high-permeability hydrophilic state to a low permeability hydrophobic state over a narrow range.

The cloud-point phenomenon and the accompanying precipitation or shrinkage of the polymer is not restricted to exclusively aqueous solutions or gels; amounts of an organic solvent up to their solubility limit in the system can be present, especially aprotic solvents such as ketones, esters, ethers or lactones, for example methyl ethyl ketone, isopropyl acetate, dimethysulfoxide or N-vinylpyrrolidone, to name a few. Addition of methyl ethyl ketone, for example, allows one to raise the cloud point temperature. Aqueous solutions of the novel polymers containing 0.5 to 30 % of solvents with at least 1 % solubility in water, are therefore another and preferred embodiment of the instant invention.

These aqueous solutions of the novel polymers can subsequently be transformed into gels by incorporating them into gel forming media, for example a polyacrylamide gel recipe as used for electrophoresis or an agar-agar gel. preferred compositions are those, in which the aqueous phase consists of a poly-acrylamide gel.

In the presence of hydrophobic n-alkyl acrylate moieties the polymers are often extremely tacky in the dry as well as in the water swollen, or hydrated state and can therefore be used as adhesives, both in their hydrogel and in their hydroplastic state. This property can be exploited, for example, to facilitate the fabrication of the aforementioned sandwich plates. On the other hand, cycloaliphatic acrylates such as cyclohexyl and trimethylcyclohexyl acrylate give polymers which are hard and glassy at room temperatur and therefore are uniquely suited to make the polymers in form of beads by suspension polymerization in aqueous brine and for applications where tackiness is undesirable.

The polymerization is suitably carried out with a free radical generating initiator at a temperature in the range from about 30°C to about 150°C, the preferred temperature ranges being between about 45°C and about 80°C. These initiators are preferably peroxides or azo catalysts having a hard-life at the polymerization temperature of at least 20 minutes. Typical useful peroxy compounds include: isopropyl percarbonate, tert.-butyl peroctoate, benzoyl peroxide, lauryl peroxide, decanoyl peroxide, acetyl peroxide, succinic acid peroxide, methyl ethyl ketone peroxide, tert.-butyl peroxyacetate, propionyl peroxide, 2,4-dichlorobenzoyl peroxide, tert.-butyl peroxypivalate, pelargonyl peroxide, 2,5-dimethyl-2,5-bis(2-ethyl-hexanoylperoxy)-hexane, p-chlorobenzoyl peroxide, tert.-butyl peroxybutyrate, tert.-butyl peroxymaleic acid, tert.-butyl peroxyisopropyl carbonate, bis-(1-hydroxy-cyclohexyl)peroxide; azo compounds include: 2,2-azo-bis-isobutyronitrile; 2,2′-azo-bis(2,4-dimethylvaleronitrile); 1,1′-azo-bis(cyclohexane carbonitrile), 2,2′-azo-bis(2,4-dimethyl-4-methxoyvaleronitrile).

Other free radical generating mechanisms can be employed, such as x-rays, electron-beams and UV-radiation. Preparation of crosslinked films and sheets by UV radiation in the presence of a photo-initiator such as diethoxyactophenone, 1-hydroxycyclohexyl phenyl ketone, 2,2-dimethoxy-2-phenylacetophenone, phenothiazine, diisopropylxanthogen disulfide, benzoin, benzoin methyl ether and other benzoin derivatives in a preferred method.

The amount of initiator can vary from 0.002 % to 1 % by weight of the monomer, but is preferably form 0.03 to 0.3 % by weight thereof.

Especially useful are linear polymers synthesized in the presence of a chain transfer agent in order to reduce the molecular weight (MW) and thereby obtain a polymer which is more easily handled in the water-equilibrated state than is a high MW-polymer. Any chain-transfer agent commonly used to modify the MW of free-radical polymerized vinyl polymers can be used, for example branched or linear alkyl thiols which 2-21 C atoms; mercapto acids like thioacetic-, thiopropionic-, thioglycolic-, thiomalic acid; thio-alcohols like thioethanol or thioglycerol; as well as fluorinated thiols like perfluoroalkyl-alkylenethiols, where perfluoralkyl is a group with 2-10 C atoms, also halogenated solvents such as chloroform, carbon tetrachloride, 1,1,1-trichloroethane and trichloroethylene.

The novel polymers can be synthesized in bulk or in solution using conventional techniques. Crosslinked and uncrosslinked polymer sheets or films for example can easily be synthesized by filling the monomer mixture, which contains heat- or UV-activated free radical initiators, into a mold held together by clamps and preferably lined with a mold releasing polymer, following by exposing the assembly to heat or UV radiation or both for several hours. The monomer may be dissolved in solvents and such solvents may be present in amounts up to 90 %. Conventional solution polymerization can be carried out in any suitable solvent, which may be ketones, esters, ethers, alcohols, amides etc., such as acetone, methyl ethyl ketone, isopropyl acetate, N,N-dimethylformamide, N-methylpyrrolidone, dioxane, ether, ethanol, isopropanol and butanol. The resulting polymers can be cast on substrates and dried to form films which can be subsequently equilibrated in water.

It is a characteristic property of the novel hydrophilic copolymers of N,N-dimethylacrylamide with over about 40 % of an alkyl acrylate with more than 2 C atoms in the alkyl group that even with a linear molecular structure they are not infinitely soluble in water, but form viscous, syrupy plastics dependent on their molecular weight, which can be coated or extruded; thess water-plasticized, but water insoluble linear and free-flowing polymers can be called hydroplastics, to be distinguished from hydrogels, which are crosslinked and no longer free-flowing and moldable; if suitable reactive sites are built in, as for example, epoxy groups or UV-crosslinkable cinnamyl groups, these hydroplastics can subsequently be crosslinked into a hydrogel.

When the novel hydrogels are synthesized in bulk, their water content at equilibrium varies slightly with the equilibration temperature, being higher at lower temperatures. The cloud point is therefore a function also of the equilibration temperature, being a constant temperature differential higher. With the same polymer therefore different cloud points can vary over a several degree range, dependent on equilibration temperature.

In the following examples the water content is defined as

$$DSw\ (\%) = \frac{\text{weight of wet sample} - \text{weight of dry sample}}{\text{weight of wet sampel}};$$

and swelling ratio as

$$SR = \frac{\text{weight of swollen sample}}{\text{weight of dry sample}}$$

Example 1:

4 g N,N-Dimethylacrylamide (DMA), 6 g 2-ethylhexyl acrylate (EHA) an 0.01 g ethylene glycol dimethacrylate (EGDMA) are mixed together with 0.01 g benzoin methyl ether (BME). The mixture is degassed 3 times in vacuo and kept under a dry $N_2$-blanket. A 101.6 mm glass mold, lined with MYLAR® and held together by clamps is assembled, using 0.5 mm silicone cord as spacer. The mold is filled with the monomer mixture and exposed to UV-light for 4 hours. Subsequently, the mold is disassembled and the clear, flexible polymer sheet is immersed in distilled water and allowed to swell to equilibrium (≡ DSw).

The swollen polymer has a DSw of 21.9 % at 20°C and exhibits a thermo-reversible cloud point of 23°C.

Examples 2-6:

Using the procedure described in Example 1, the following polymers are prepared and their DSw and cloud points determined (content of 0.1 g EGDMA).

| Thermotropic-biphilic Hydrogels: Effect of DMA/EHA Ratio on Water Swelling, and Cloud Point (CP) | | | | |
|---|---|---|---|---|
| Ex. | Composition* % (by weight) | | DSw (%) at 15°C | CP (°C) Effect |
| | DMA | EHA | | |
| 2 | 20 | 80 | 12.5 | - |
| 3 | 30 | 20 | 13 | 17 strong |
| 1 | 40 | 60 | 21 | 23 strong |
| 4 | 50 | 50 | 34 | 24 strong |
| 5 | 60 | 40 | 49 | 31 weaker |
| 6 | 70 | 30 | 65 | 36 weak |

* DMA is N,N-dimethylacrylamide
EHA is 2-ethylhexyl acrylate

Example 7-8:

Using the procedure of Example 1 the following polymers are prepared using different levels of crosslinker EGDMA.

| Ex. | Composition* % (by weight) | | | DSw (%) at 20°C | CP (°C) |
|---|---|---|---|---|---|
| | DMA | EHA | EGDMA | | |
| 7 | 50 | 50 | 0.5 | 27 | 30 |
| 8 | 50 | 50 | 0.2 | 34 | 25 |
| 4 | 50 | 50 | 0.1 | 36 | 24 |

* DMA is N,N-dimethylacrylamide
EHA is 2-ethylehxyl acrylate
EGDMA is ethylene glycol dimethacrylate

Examples 9-20:

Thermotropic/biphilic Hydrogels: Effect of comonomer on water swelling and cloud point of DMA-copolymers.

Using the procedure of Example 1, the copolymers listed in the following table are prepared, using 0.1 % ethylene glycol dimethacrylate as crosslinker. Their water-content and cloud points are determined as described.

9, 10, 13 and 14 are comparative examples

| Ex. No. | Composition (% by weight) | | | DSw (%) | CP | Effect |
|---|---|---|---|---|---|---|
| | DMA | Other (Hydrophobe) | | at 20°C | (°C) | |
| 9 | 40 | methyl-A | 60 | 57 | – | – |
| 10 | 40 | ethyl-A | 60 | 63 | 35 | weak |
| 11 | 40 | octyl-A | 60 | 21 | 24 | strong |
| 12 | 40 | decyl-A | 60 | 26 | 26 | strong |
| 1 | 40 | 2-ethylhexyl-A | 60 | 22 | 23 | strong |
| 13 | 50 | propyl-A | 50 | 49 | 40 | med.-weak |
| 14 | 50 | butyl-A | 50 | 36 | 27 | strong |
| 15 | 50 | octyl-A | 50 | 37 | 28 | strong |
| 4 | 50 | 2-ethylhexyl-A | 50 | 34 | 24 | strong |
| 16 | 50 | decyl-A | 50 | 38 | 31 | strong |
| 17 | 50 | dodecyl-A | 50 | 41 | ~ 50 | weak |
| 18 | 50 | octadecyl-A | 50 | 38 | ~ 80 | weak |
| 19 | 50 | cyclohexyl-A | 50 | 33 | 27 | strong |
| 20 | 50 | trimethyl-cyclohexyl-A | 50 | 35 | 34 | strong |

A: acrylate

CP: cloud point

DSw: water content, based on swollen polymer (w/w).

Examples 21a and 21b: Synthesis of linear polymers

a) 12 g N,N-dimethylacrylamide (DMA) and 8 g 2-ethyl hexyl acrylate (EHA) are dissolved in 20 g ethanol, together with 0.02 g VAZO-52 [2,2'-azobis(2,4-dimethylvaleronitrile)] as initiator. The mixture is stirred under dry nitrogen for 24 hours at 60°C. A viscous polymer solution is obtained with a conversion of 97 %, determined gravimetrically.

A sample of the solution is poured on a glass plate and allowed to dry. The dry coating is equilibrated in water for 10 hours, absorbing 41 % water without dissolving; it is covered with a second glass plate and both plates sealed by tape. The composite laminate window-pane has a reversible cloud point of 22°C.

b) Using the same procedure a linear copolymer consisting of 40 % DMA and 60 % EHA is prepared, which in the water swollen state has a cloud point of 25°C.

Examples 21c to 21g:

Using the same procedure as in Example 21a, 50 % solutions in ethanol of linear copolymers of N,N-dimethylacrylamide (DMA) with equal amounts (w/w) of methyl acrylate, ethyl acrylate, n-propyl, n-butyl, and n-octyl acrylate are prepared. After drying, the propyl to octyl acrylate copolymers form hydroplastics in water, with cloud points between 15 and 25°C; the methyl acrylate copolymer is completely water soluble and exhibited no cloud point below 100°C; the ethyl acrylate copolymer dissolved in cold water only, forming a clear aqueous solution with a cloud point of 16°C.

| Ex. 21 | Composition (% by weight) DMA (%) | Comonomer $M_2$ C-atoms of Alkyl in (%) Acrylate Ester | DSw (%) | CP (°C) |
|---|---|---|---|---|
| c | 50 | 1 methyl-A    50 | soluble to 100°C | – |
| d | 50 | 2 ethyl-A     50 | 82 at C.P. [1] | 16 |
| e | 50 | 3 n-propyl-A  50 | 75 ⎤ [2] | 15 |
| f | 50 | 4 n-butyl-A   50 | 41 ⎬ | 21 |
| g | 50 | 8 n-octyl-A   50 | 42 ⎦ | 23 |

[1] soluble below cloud point.

[2] insoluble below cloud point (hydroplastic).

Examples 21d and 21h to 21j:

The procedure of Example 21d is repeated, using the monomer mixtures indicated below with 0.5 g dodecyl mercaptan as a chain transfer agent. Clear viscous resins are obtained with essentially 100 % conversion. The polymers are dissolved in water and as 1 % solutions have the following cloud points:

8

| Ex. 21 | Composition (% by weight) | | | $C_{12}H_{25}SH$ (pph) | Cloud Point (°C) |
|---|---|---|---|---|---|
| | DMA* | Ethyl Acrylate | Methyl Acrylate | | |
| d | 50 | 50 | - | - | 16 |
| h | 50 | 37.5 | 12.5 | 5 | 20 |
| i | 50 | 25 | 25 | 5 | 26 |
| j | 50 | 12.5 | 37.5 | 5 | 30 |

* DMA is N,N-dimethylacrylamide

The results show that the cloud point rises with increasing hydrophilicity of the copolymer.

Examples 22-23: Biphilic Hydrogels.

Following the procedure described in Example 1, the copolymers listed below are prepared and their water content, clound points and appearance noted (0.1 % ethylene glycol dimethacrylate as crosslinker).

| Ex. | Composition | | DSw (%) (22°C) | Appearance[1] | | Cloud Point (°C) |
|---|---|---|---|---|---|---|
| | Hydrophile DMA % | Hydrophobe EHA % | | Dry | Wet | |
| | (by weight) | | | | | |
| 22 | 40 | 60 | 20 | cl | cl | 25, strong |
| 23 | 40 | 50 | 34 | cl | cl | 24, strong |

[1] cl: clear

[2] EHA: 2-ethylhexyl acrylate

Example 24:

10 g N,N-Dimethylacrylamide (DMA), 10 g 2-ethylhexyl acrylate (EHA) and 1 g dodecylmercaptan ($C_{12}$-SH) are mixed together with 10 g ethanol and 0.05 g VAZO-52 [2,2'-azobis(2,4-dimethylvaleronitrile)]. The solution is sparged with nitrogen and stirred in a screw-cap bottle on a water bath for 24 hours at 55°C. Conversion to polymer, by gravimetry, is > 99 %. The polymer, which has a calculated molecular weight (MW) of ~ 4040, absorbed 36 % water (23°C), forming a clear water-insoluble hydroplastic which is flowable enough to allow preparation of bubble-free 0.1 mm-1.0 mm casts between sealed glass plates and which has a reversible cloud point at 23°C.

Using the same procedure, a low MW hydroplastic thermo-reversible copolymer of DMA and EHA is obtained, using 2 g $C_{12}$-SH as chain transfer agent. A tacky, low MW (~ 2000, calculated) clear polymer is obtained which forms in water a syrupy paste with an equilibrium water content of 32 % (23°C) and has a cloud point of 26°C.

Example 25:

10 g N,N-Dimethylacrylamide (DMA), 5 g 2-ethylhexyl acrylate (EHA) and 5 g methyl acrylate (MA) are mixed together with 20 g ethanol and 0.05 g VAZO-52 [2,2'-azobis(2,4-dimethylvaleronitrile)]. The solution is sparged with nitrogen and stirred ina screw-cap bottle on a water bath for 24 hours at 55°C. Conversion, by gravimetry, is 100 %. The hydroplastic polymer absorbs 48 % water (20°C) and has a cloud point of 23°C.

The same procedure is repeated, using 10 g DMA, 2.5 g EHA and 7.5 g MA as conomomer. The polymer absorbs 70 % water (22°C), forming a whitish paste and has a cloud point of 5°C.

Examples 26-28:

Using the procedure described in Example 1 the following copolymers of N,N-dimethylacrylamide (DMA) and 2-ethylhexyl acrylate (EHA) with three other comonomer[1], were synthesized and their water contents and cloud points determined:

| Ex. | Composition, % by weight | | | | DSw | Cloud Point |
|---|---|---|---|---|---|---|
| | DMA | EHA | $M_3$ [1] | EGDMA [2] | (at 22°C) | (°C) |
| 26 | 49.8 | 30 | Si₄MA 20 | 0.2 | 39 | 40 |
| 27 | 49.8 | 30 | $F_nA$ 20 | 0.2 | 41 | 40 |
| 28 | 49.8 | 30 | MMA 20 | 0.2 | 42 | 40 |

[1] Si₄MA: tris-(trimethylsiloxy)silyl-propyl methacrylate

$F_nA$: perfluoroalkyl-ethyl acrylate with an $R_f$-distribution of $C_6F_{13}/C_8F_{17}/C_{10}F_{21}/C_{12}F_{25} = 6/60/25/10$

MMA: methyl methacrylate

[2] EGDMA: ethylene glycol dimethacrylate.

Comparative Examples 29 and 30:

5 g N,N-Dimethylacrylamide, 5 g ethyl acrylate and 0.01 g ethylene glycol dimethacrylate are dissolved in 10 g ethanol together with 0.02 g benzoin methyl ether. The mixture is added to a MYLAR-lined glass mold, using a 1 mm spacer, and irradiated by UV for 18 hours. A clear, soft crosslinked polymer sheet is obtained, which is extracted and equilibrated in water.

Using the same process, a polymer sheet is prepared using a mixture of 2.5 g ethyl- and 2.5 g methyl acrylate as hydrophobic comonomers.

The following table shows the DSw values and, in brackets, the swelling-ratio SR (= weight of swollen polymer/weight of dry polymer) of both polymers at various temperatures.

| Ex.No. | DSw, (SR) at different temperatures: | | | |
|---|---|---|---|---|
| | 9°C | 25°C | 33°C | 40°C |
| 29 | 86 (7.1) | 67 (3.0) | 61 (2.5) | 58 (2.4) |
| 30 | 91 (11.1) | 73 (3.7) | 71 (3.5) | 58 (2.4) |

The following examples demonstrate the effect of cosolvent on cloud point temperature.

Examples 31-32:

5 g N,N-Dimethylacrylamide (DMA) and 5 g ethyl acrylate (EA) are dissolved in 10 g methyl ethyl ketone (MEK), together with 0.05 g VAZO 52 [2,2′-azobis(2,4-dimethylvaleronitrile)] and polymerized under a $N_2$-blanket at 55°C for 18 hours and at 65°C for 2 hours. A clear, viscous solution with 50.5 % solids content is obtained.

Using the same procedure, a solution in MEK is prepared of a copolymer of 5 g DMA, 2.5 g EA and 2.5 g methyl acrylate (MA).

The 50 % MEK solutions of these polymers are diluted in stages with distilled water and the cloud-point temperatures of the solutions are determined.

| Ex. | Polymer-Composition, (% by weight) | | | Composition of Solution, (% by weight) | | | C.P. (°C) |
|---|---|---|---|---|---|---|---|
| | DMA | EA | MA | Polymer | MEK | Water | |
| 31 | 50 | 50 | - | 25.0 | 25.0 | 50 | 36 |
| | 50 | 50 | | 16.5 | 16.5 | 66 | 27 |
| | 50 | 50 | | 12.5 | 12.5 | 75 | 23 |
| | 50 | 50 | | 8.5 | 8.5 | 83 | 21 |
| | 50 | 50 | | 6.0 | 6.0 | 88 | 19 |
| | 50 | 50 | | 5.0 | 5.0 | 90 | 18 |
| 21d | 50 | 50 | | 1.0 | - | 99 | 16 |
| 32 | 50 | 25 | 25 | 16.5 | 16.5 | 66 | 39 |
| | 50 | 25 | 25 | 12.5 | 12.5 | 75 | 35 |
| | 50 | 25 | 25 | 8.5 | 8.5 | 83 | 32 |
| | 50 | 25 | 25 | 5.0 | 5.0 | 90 | 25 |
| 21i[1] | 50 | 25 | 25 | 1.0 | - | 99 | 26 |

[1] 5 % chain transfer agent dodecyl mercaptan

Example 33: Synthesis of Polyacrylamide-Interpenetrating-Polymer Network (IPN) Hydrogels (Comparative Examples)

5.7 g pf 12.6 % solutions of the polymers of Example 21h, i, j in a 95/5 (weight/weight)water/methyl-ethyl ketone mixture is mixed with 4.0 g of an aqueous solution of 22.2 % acrylamide an 0.6 % methylene-bis acrylamide and 0.47 g of a 1.5 % aqueous solution of $(NH_4)_2S_2O_8$. After degassing, the solutions are cooled to 10°C and 0.012 g tetramethylethylene diamine are added. The clear mixtures are poured into vials. Gelation occurs within 10 minutes. The gels have reversible cloud points of 0°C (Polymer 21h), 17°C (Polymer 21i) and 24°C (Polymer 21j).

## Claims

1.  A random copolymer which comprises the copolymerization product of
    (a) 10 to 85 % by weight of N,N-dimethylacrylamide;
    (b) 90 to 15 % by weight of an aliphatic, cycloaliphatic, aromatic or araliphatic hydrocarbyl acrylate or mixture thereof which contains an average of 1.2 to 18 carbon atoms in the hydrocarbyl moiety;
    (c) 0 to 5 % by weight of a polyolefinic crosslinking monomer;
    with the proviso,
    a) that if the average chain-lenght of the hydrocarbyl moiety is less than 5 carbon atoms, the polymer is uncrosslinked (c is zero) and
    b) that in the copolymerization step the reaction mixture is essentially free of unsaturated carboxylic acids.

2.  A copolymer according to claim 1 which comprises the copolymerization product of
    (a) 20 to 75 % by weight of N,N-dimethylacrylamide,
    (b) 80 to 25 % by weight of an alkyl or cycloalkyl acrylate or mixture thereof which contains an average of 1.25 to 12 carbon atoms in said alkyl or cycloalkyl moiety, and
    (c) 0 to 1 % by weight of a polyolefinic crosslinking monomer, with the proviso, that if the average chain-length of the hydrocarbyl moiety is less than 5 carbon atoms, the polymer is uncrosslinked (c) is zero).

3.  A copolymer according to claim 1 which comprises the copolymerization product of
    (a) 25 to 65 % by weight of N,N-dimethacrylamide,
    (b) 75 to 35 % by weight of an alkyl or cycloalkyl acrylate or mixture thereof which contains an average of 6 to 10 carbon atoms in said alkyl or cycloalkyl moiety, and
    (c) 0 to 0.5 % by weight of a polyolefinic crosslinking monomer.

4.  A copolymer according to claim 1 which comprises the copolymerization product of

(a) 25-65 % by weight of N,N-dimethyl acrylamide, and
(b) 75-35 % by weight of an alkyl acrylate or mixture thereof which contains an average of 1.25-5 carbon atoms in said alkyl moiety, and wherein component (c) is zero.

5. A copolymer according to claim 1 wherein the hydrocarbyl moiety in the acrylate of component (b) is a cycloaliphatic group 6 to 12 carbon atoms.

6. A copolymer according to claim 1 which is prepared in the presence of 1 to 10 mol %, based on the total olefinic monomers polymerized, of a chain transfer agent.

7. A copolymer according to claim 1 wherein component (c) is 0 % by weight.

8. A copolymer according to claim 2 wherein the component (c) is 0 % by weight.

9. A copolymer according to claim 3 wherein component (c) is 0 % by weight.

10. A composition exhibiting a reversible temperature dependent clear to opaque transition between 0°C and 50°C, which comprises
    (a) 10 to 98 % by weight of water, and
    (b) 90 to 2 % by weight of a crosslinked or linear water-swellable copolymer according to claim 1.

11. A composition exhibiting a reversible temperature dependent clear to opaque transition between 0°C and 50°C, which comprises
    (a) 10 to 99.5 % by weight of water, and
    (b) 90 to 0.5 % by weight of a substantially uncrosslinked polymer which polymer is soluble in water below the cloud point and which comprises the copolymerization product of
      (a) 25-65 % by weight of N,N-dimethyl acrylamide, and
      (b) 75-35 % by weight of an alkyl acrylate or mixture thereof which contains an average of 1.25-5 carbon atoms in said alkyl moiety, and wherein component (c) is zero.

12. A composition according to claim 10 which additionally contains 0.5 to 30 % by weight of an organic solvent which has at least a 1 % solubility in water.

13. A composition according to claim 11 which additionally contains 0. 5 to 30 % by weight of an organic solvent which has at least a 1 % solubility in water.

14. A composition according to claim 10, in which the aqueous phase consists of a poly-acrylamide gel.

15. A composition according to claim 11, in which the aqueous phase consists of a poly-acrylamide gel.

16. A composition according to claim 12, in which the aqueous phase consists of a poly-acrylamide gel.

17. A composition according to claim 13, in which the aqueous phase consists of a poly-acrylamide gel.

**Patentansprüche**

1. Statistisches Copolymer umfassend das Copolymerisationsprodukt aus
    (a) 10 bis 85 Gew.-% N,N-Dimethylacrylamid;
    (b) 90 bis 15 Gew.-% eines aliphatischen, cycloaliphatischen, aromatischen oder araliphatischen Kohlenwasserstoff-acrylats oder einer Mischung davon, welches im Durchschnitt 1,2 bis 18 Kohlenstoffatome im Kohlenwasserstoffrest aufweist; und
    (c) 0 bis 5 Gew.-% eines polyolefinischen vernetzenden Monomers;
    mit der Maßgabe,
    a) daß, wenn die mittlere Kettenlänge des Kohlenwasserstoffrests weniger als 5 Kohlenstoffatome beträgt, das Polymer nicht vernetzt ist (c Null ist) und
    b) daß die Reaktionsmischung in der Copolymerisationsstufe im wesentlichen frei ist von ungesättigten Carbonsäuren.

**2.** Copolymer nach Anspruch 1, umfassend das Copolymerisationsprodukt aus

(a) 20 bis 75 Gew.-% N,N-Dimethylacrylamid,

(b) 80 bis 25 Gew.-% eines Alkyl- oder Cycloalkyl-acrylats oder einer Mischung davon, welches im Durchschnitt 1,25 bis 12 Kohlenstoffatome in dem Alkyl- oder Cycloalkylrest aufweist, und

(c) 0 bis 1 Gew.-% eines polyolefinischen vernetzenden Monomers mit der Maßgabe, daß, wenn die durchschnittliche Kettenlänge des Kohlenwasserstoffrests weniger als 5 Kohlenstoffatome beträgt, das Polymer nicht vernetzt ist (c Null ist).

**3.** Copolymer nach Anspruch 1, umfassend das Copolymerisationsprodukt aus

(a) 25 bis 65 Gew.-% N,N-Dimethylacrylamid,

(b) 75 bis 35 Gew.-% eines Alkyl- oder Cycloalkyl-acrylats oder einer Mischung davon, welches im Durchschnitt 6 bis 10 Kohlenstoffatome in dem Alkyl- oder Cycloalkylrest aufweist, und

(c) 0 bis 0,5 Gew.-% eines polyolefinischen vernetzenden Monomers.

**4.** Copolymer nach Anspruch 1, umfassend das Copolymerisationsprodukt aus

(a) 25 bis 65 Gew.-% N,N-Dimethylacrylamid und

(b) 75 bis 35 Gew.-% eines Alkyl-acrylats oder einer Mischung davon, welches im Durchschnitt 1,25 bis 5 Kohlenstoffatome in dem Alkylrest aufweist, und worin der Bestandteil (c) Null ist.

**5.** Copolymer nach Anspruch 1, worin der Kohlenwasserstoffrest in dem Acrylat des Bestandteils (b) eine cycloaliphatische Gruppe mit 6 bis 12 Kohlenstoffatomen ist.

**6.** Copolymer nach Anspruch 1, welches in Gegenwart von 1 bis 10 Mol-% eines Kettenübertragungsmittels, bezogen auf die Gesamtmenge der polymerisierten olefinischen Monomeren, hergestellt worden ist.

**7.** Copolymer nach Anspruch 1, worin der Bestandteil (c) in einer Menge von 0 Gew.-% vorhanden ist.

**8.** Copolymer nach Anspruch 2, worin der Bestandteil (c) in einer Menge von 0 Gew.-% vorhanden ist.

**9.** Copolymer nach Anspruch 3, worin der Bestandteil (c) in einer Menge von 0 Gew.-% vorhanden ist.

**10.** Masse mit einem reversiblen, temperaturabhängigen Übergang von Klar zu Trüb zwischen 0°C und 50°C, enthaltend

(a) 10 bis 98 Gew.-% Wasserund

(b) 9 bis 2 Gew.-% eines vernetzten oder linearen, in Wasser quellbaren Copolymers nach Anspruch 1.

**11.** Masse mit einem reversiblen, temperaturabhängigen Übergang von Klar zu Trüb zwischen 0°C und 50°C, enthaltend

(a) 10 bis 99,5 Gew.-% Wasser und

(b) 90 bis 0,5 Gew.-% eines im wesentlichen nicht vernetzten Polymers, welches unterhalb des Trübungspunkts in Wasser löslich ist und das Copolymerisationsprodukt aus

(a) 25 bis 65 Gew.-% N,N-Dimethylacrylamid und

(b) 75 bis 35 Gew.-% eines Alkylacrylats oder einer Mischung davon, welches im Durchschnitt 1,25 bis 5 Kohlenstoffatome in dem Alkylrest aufweist, und worin der Bestandteil (c) Null ist, umfaßt.

**12.** Masse nach Anspruch 10, welche zusätzlich 0,5 bis 30 Gew.-% eines organischen lösungsmittels enthält, das eine Löslichkeit in Wasser von mindestens 1 % aufweist.

**13.** Masse nach Anspruch 11, welche zusätzlich 0,5 bis 30 Gew.-% eines organischen Lösungsmittels enthält, das eine Löslichkeit in Wasser von mindestens 1 % aufweist.

**14.** Masse nach Anspruch 10, worin die wäßrige Phase aus einem Polyacrylamid-Gel besteht.

**15.** Masse nach Anspruch 11, worin die wäßrige Phase aus einem Polyacrylamid-Gel besteht.

**16.** Masse nach Anspruch 12, worin die wäßrige Phase aus einem Polyacrylamid-Gel besteht.

**17.** Masse nach Anspruch 13, worin die wäßrige Phase aus einem Polyacrylamid-Gel besteht.

**Revendications**

**1.** Copolymère statstique comprenant le produit de copolymérisation

(a) de 10 à 85 % en poids de N,N-diméthylacrylamide;

(b) de 90 à 15 % en poids d'un acrylate d'hydrocarbure aliphatique, cycloaliphatique, aromatique ou araliphatique ou leur mélange, contenant en moyenne de 1,2 à 18 atomes de carbone dans la partie hydrocarbure;

(c) de 0 à 5 % en poids d'un monomère polyoléfinique réticulant;

avec la condition que

(a) si la longueur moyenne de chaîne de la partie hydrocarbure est inférieure à 5 atomes de carbones, le polymère n'est pas réticulé (c est zéro) et

(b) à l'étape de copolymérisation le mélange réactionnel est essentiellement exempt d'acide carboxylique non saturé.

**2.** Copolymère selon la revendication 1, comprenant le produit de copolymérisation

(a) de 20 à 75 % en poids de N,N-diméthylacrylamide,

(b) de 80 à 25 % en poids d'un acrylate d'alkyle ou d'un acrylate de cycloalkyle ou leur mélange, contenant en moyenne de 1,25 à 12 atomes de carbone dans la partie groupe alkyle ou cylcoalkyle, et

(c) de 0 à 1 % en poids d'un monomère polyoléfinique réticulant, avec la condition que si la longueur moyenne de la chaîne de la partie hydrocarbure est inférieure à 5 atomes de carbone, le polymère est non réticulé (c est zéro).

**3.** Copolymère selon la revendication 1, comprenant le produit de copolymérisation

(a) de 25 à 65 % en poids de N,N-diméthylacrylamide,

(b) de 75 à 35 % en poids d'un acrylate d'alkyle ou cycloalkyle ou leur mélange, contenant en moyenne de 6 à 10 atomes de carbone dans la partie alkyle, et

(c) de 0 à 0,5 % d'un monomère polyoléfinique réticulant.

**4.** Copolymère selon la revendication 1, comprenant le produit de copolymérisation de

(a) de 25 à 65 % en poids de N,N-diméthylacrylamide, et

(b) de 75 à 35 % en poids d'un acrylate d'alkyle, d'un acrylate cycloalkyle ou leur mélange, contenant en moyenne de 1,25 à 5 atomes de carbone dans la partie alkyle, et où le constituant (c) est zéro.

**5.** Copolymère selon la revendication 1, où le groupe hydrocarbure dans l'acrylate du constituant b est un groupe cycloaliphatique ayant de 6 à 12 atomes de carbone.

**6.** Copolymère selon la revendication 1, préparé en présence de 1 à 10 moles % d'un agent de transfert de chaîne, calculé sur la totalité du monomère oléfinique polymérisé.

**7.** Copolymère selon la revendication 1, où le constituant (c) est 0 % en poids.

**8.** Copolymère selon la revendication 2 où le constituant (c) est 0 % en poids.

**9.** Copolymère selon la revendication 3 où le constituant (c) est 0 % en poids.

**10.** Composition présentant une transition claire à opaque réversible entre 0 et 50°C, dépandant de la température, et comprenant

(a) de 10 à 98 % en poids d'eau, et

(b) de 90 à 2 % en poids d'un copolymère linéaire ou réticulé gonflable dans l'eau selon la revendication 1.

**11.** Composition présentant une transition de claire à opaque réversible, dépendante de la température, entre 0°C et 50°C, et qui comprend

(a) de 10 à 99,5 % en poids d'eau et

(b) de 90 à 0,5 % en poids d'un polymère sensiblement non réticulé lequel polymère est soluble dans l'eau en dessous du point de trouble et qui comprend le produit de copolymérisation

(a) de 25 à 65 % en poids de N,N-diméthylacrylamide, et

(b) de 75 à 35 % en poids d'un acrylate d'alkyle ou cycloalkyle ou leur mélange, contenant en moyenne de 1,25 à 5 atomes de carbone dans le groupe alkyle, et dans lequel le constituant (c) est zéro.

**12.** Composition selon la revendication 10, qui contient en outre de 0,5 à 30 % en poids d'un solvant organique ayant une solubilité dans l'eau, d'au moins 1 %.

**13.** Composition selon la revendication 11, qui contient en outre de 0,5 à 20 % en poids d'un solvant organique ayant une solubilité dans l'eau, d'au moins 1 %.

**14.** Composition selon la revendication 10, dans laquelle la phase aqueuse est constituée d'un gel de poly-acrylamide.

**15.** Composition selon la revendication 11, dans laquelle la phase aqueuse est constituée d'un gel de poly-acrylamide.

**16.** Composition selon la revendication 12, dans laquelle la phase aqueuse est constituée d'un gel de poly-acrylamide.

**17.** Composition selon la revendication 13, dans laquelle la phase aqueuse est constituée d'un gel de poly-acrylamide.